# EUROPEAN PATENT APPLICATION

(11) **EP 4 596 760 A1**
(43) Date of publication of application: **06.08.2025**
(21) Application number: 24382089.1
(22) Date of filing: 30.01.2024
(51) Int. Cl.: C25B 15/02, C25B 1/04

(54) **A METHOD FOR HEATING UP ELECTROLYTIC UNITS OF AN ELECTROLYSIS PLANT AND A SYSTEM ASSOCIATED THEREWITH**

(71) Applicant: Nordex Energy Spain, S.A.U., 31395 Barasoain (Navarra) (ES); Acciona Nordex Green Hydrogen S.L., 31395 Barasoain (ES)
(72) Inventor: GARCÍA, Alberto, 31395 Barasoain (ES); ZORRILLA, Pablo, 31395 Barasoain (ES); GOÑI, Naiara, 31395 Barasoain (ES); CUESTA, David, 31395 Barasoain (ES); MARTÍNEZ, Jon, 31395 Barasoain (ES); ECHEVERRÍA, Fernando, 31395 Barasoain (ES); REVUELTA, Joseba, 31395 Barasoain (ES); BALLESTERO, Miguel, 31395 Barasoain (ES)
(74) Representative: Elion IP, S.L.

(57) **Abstract**

The disclosure refers to a computer-implemented method for heating up electrolytic units. The method comprises determining whether some electrolytic units of an electrolysis plant require heating up to have them at a temperature within a predetermined range in a future time span; controlling the electrolytic units to power them up based on first electric power available in a current time span; heating up the electrolytic units to have them at the temperature within the predetermined range in the at least one future time span; and repeating the steps such that the heating up is determined for one or more time spans that occur at the same time and/or later than the future time span, thereby repeatedly controlling the temperature of the electrolytic units to be at a temperature within the predetermined range in the future time spans.

## Description

### TECHNICAL FIELD

The present disclosure belongs to the field of electrolysis, such as, for example, for hydrogen generation. More specifically, the disclosure relates to a method for heating up electrolytic units of an electrolysis plant and a system associated therewith, that optimize hydrogen generation processes.

### BACKGROUND

Over the last few decades, there has been a massive deployment of renewable energy systems such as solar energy systems or wind energy systems. One of the major problems of this type of energy is the intermittent production of, e.g., photovoltaic power plants, wind power plants, tidal power plants, etc. To overcome the problem of the intermittency of renewable power sources, baseload resources such as coal, nuclear or natural gas, which are capable of running continuously for long periods of time thereby generating a constant power flow, are being used as backup power systems. However, these backup power sources have high environmental impact and the raw material they use to produce energy is generally imported, thus worsening the ecological footprint and having dependence on the availability of such materials, not to mention the dependence on material suppliers.

In recent years, different alternatives for the management and storage of renewable energy have been developed. These alternatives are, e.g., batteries, hydrogen and, on a smaller scale, storage through reversible hydroelectric power plants, among other energy storage systems. They allow the storage of power during renewable production peaks. Electrolyzers are devices capable of splitting, by using electricity, water molecules into their constituent oxygen and hydrogen atoms. The hydrogen and oxygen produced from electrolysis can be stored using existing technology. For example, hydrogen can be stored physically as either a gas or a liquid.

Electrolyzers require being adequately set up for them to be operative when needed and to produce hydrogen efficiently. One of the main issues electrolysis plants have to deal with is that they may be fed with power coming from a renewable source so the power input flow may not be constant and hardly predictable. Then, when there is available power for hydrogen production the electrolysis plant should be able to start the right number of electrolyzers and to have them at the optimal working regime/temperature by that time. However, as mentioned before, these renewable power sources are intermittent and their production depends mainly on weather conditions, so having an adequate number of electrolyzers ready at the optimal working temperature at any time is a very complex task.

Configuring the electrolyzers in advance is difficult not only due to the long times for the electrolyzers to be ready if they were not previously active, or them being too hot due to their continued operation, but also due to the complexities on establishing the adequate number of active electrolyzers ready to produce hydrogen as aforesaid. For example, document EP4057476A1 discloses a system and a method for producing hydrogen from renewable energy that maintains electrolyzers in a permanent hot standby condition, that is, a temperature of the hydrogen production system is always kept within an operating temperature range. This solution is highly inefficient, not only energetically but also from the standpoint of operational, i.e., useful, life of the electrolyzers, since it keeps electrolyzers active and hot during long periods of time during which they are not being used for producing hydrogen.

Therefore, there is interest in providing methods and systems for heating up an adequate number of electrolyzers of an electrolysis plant for them to be at their working temperature when needed based on an estimated available power at a future instant, specially, when this available power comes from renewable power sources.

### DESCRIPTION

A first aspect of the disclosure relates to a computer-implemented method for heating up electrolytic units of an electrolysis plant.

The method comprises determining whether one or more electrolytic units of at least one electrolysis plant require heating up to have the one or more electrolytic units at a temperature within a predetermined temperature range in at least one future time span. The predetermined temperature range may be selected as the optimal temperature range at which the electrolytic unit is most efficient producing a substance in the form of, for example, gas. The substance may preferably be hydrogen.

The method further comprises heating up the one or more electrolytic units according to the determination made related to heating up. This causes the electrolytic units to operate at a temperature within the predetermined temperature range in the at least one future time span. In other words, the method may cause the heating of those electrolytic units previously determined so they are able to reach an operating temperature that is within the previously determined temperature range, preferably the optimal temperature range for producing a substance, at the predefined future time span. To do so, the electrolytic units may gradually, and either directly or indirectly, increase their operating temperature in a programmed manner until the mentioned temperature at the predefined future time span is reached. Further, in some embodiments, the method may also comprise controlling the one or more electrolytic units of the at least one electrolysis plant to power up the electrolytic units based on a first electric power available at a current time span. That is, the available power is used for operating the electrolytic units so that they may produce a substance, such as, hydrogen.

Then, the method comprises repeating, a plurality of times, the steps of determining the heating up of the electrolytic units, controlling and heating up of the electrolytic units such that the required heating up is determined for one or more future time spans that occur at the same time and/or later than the at least one future time span, thereby repeatedly controlling the temperature of the one or more electrolytic units to be at a temperature within the predetermined temperature range in the one or more future time spans. The one or more future time spans occurring at the same time or later than the at least one future time span refers to additional future time windows (the one or more future time spans) that may partially overlap or occur later than the firstly selected future time window (the at least one future time span). This whole set of time spans may cover a preestablished time range within which the electrolytic units want to be preconfigured and/or controlled in advance.

Further, the determination of the heating up of the electrolytic units is at least based on second electric power available in the at least one future time span and the temperature of a plurality of electrolytic units of the at least one electrolysis plant in the current time span, with the plurality of electrolytic units comprising the one or more electrolytic units. That is to say, how much and how fast the electrolytic units are to be heated up may depend on the current temperature of the electrolytic units and a forecast (namely, an estimation) of the power available at that future time span. The forecast about the future power availability may be generated by, e.g., one or more computing devices, for example, but without limitation, computing devices of an Energy Management System (EMS) that is part or is communicatively coupled (in wired or in wireless form) to the power plant, grid or storage system from which power is received at the electrolysis plant. By repeating the step of determining the heating up of the electrolytic units, controlling and heating up of the electrolytic units, a plurality of temperature setpoints, each temperature setpoint corresponding to a different future time span, are generated for the electrolytic units to maximize their substance production, preferably, hydrogen production.

The method, which may be implemented in, e.g., one or more controllers of the at least one electrolysis plant, prepares the electrolytic units in advance because it may take some time to get them at an adequate or optimal operating temperature, especially if, as in some embodiments, electrolytic units are to be heated up progressively so as not to damage the electrolytic units. Accordingly, the method enables determining how many and, optionally, which one(s) of the electrolytic units of the electrolysis plant is/are to be heated up at the adequate/optimal operating temperature at a particular future instant so that they are ready to produce a substance, e.g., hydrogen. This is done based on at least the estimated electric power available at that particular future time instant and the current operating temperature of the electrolytic units. The method thus increases the efficiency and effectiveness of the substance generation process by having the electrolytic units in an adequate or optimal operating regime by the time they are needed which, in turn, increases or maximizes substance production, and/or increases or maximizes the operational life of the electrolytic units without hindering hydrogen production. This method also allows actively adapting the operation and workload of the electrolytic units to the available power at any time instant so that electrolytic units are capable of using most available power even when sudden increases or decreases of available power happen.

As used herein, the adequate or optimal operating temperature or temperature range of electrolytic units may refer to the temperature and temperature range that allows producing hydrogen effectively and efficiently according to the characteristics of the electrolytic units, and which depends upon the technology used for the electrolytic unit and the materials used, and/or the temperature and temperature range that allows increasing the operational life of the electrolytic units. In this sense, the predetermined adequate or optimal operating temperature or temperature range for the electrolytic units may be determined, in some embodiments, by the manufacturer and/or the operator of the electrolytic units whereas, in some other embodiments, the temperature or temperature range may be determined by way of simulations or data relative to past use of the electrolytic units.

As used herein, an electrolytic unit may refer to any electrochemical device in which at least one physical substance is decomposed into two or more physical substances (one of them being, for example, hydrogen), and it may involve the conversion of electrical energy into chemical energy or vice versa. The electrolytic units are formed, in some examples, by stacks of electrolytic cells in which each stack includes one or more electrolytic cells that are connected to each other. Each electrolytic cell may be formed by two metallic or electronic conductors (electrodes) held apart from each other and in contact with an electrolyte, usually a dissolved or fused ionic compound. Preferably, the electrolytic units are electrolyzers that use electricity to split water into hydrogen and oxygen.

In this disclosure, an electrolysis plant may refer to any facility in which one or more electrolytic units are operated to convert electrical energy to chemical energy or vice versa. Preferably, the electrolysis plants may be formed by one or more electrolyzers that use electricity, preferably, electricity from renewable energy sources such as, but without limitation, wind power plants, solar power plants or tidal power plants, among others, and water to produce hydrogen and oxygen.

In some embodiments, the heating up of the one or more electrolytic units is conducted by powering the one or more electrolytic units.

The one or more electrolytic units may heat up owing to current supplied thereto, or additional current supplied thereto when they are already powered up, but they are to be heated up as well.

In some embodiments, the heating up of the one or more electrolytic units is conducted by providing the one or more electrolytic units with heat, such as with heat caused by one or more other electrolytic units and/or one or more apparatuses of the electrolysis plant or a synthesis gas plant.

Excess heat from other electrolytic units can be directed towards electrolytic units within the electrolysis plant that are to be heated up, thereby benefiting from the heat that is otherwise wasted. Additionally or alternatively, other apparatuses within the electrolysis plant or a synthesis gas plant can be directed towards electrolytic units for heating up.

In some embodiments, the predetermined temperature range is selected based on a targeted minimum efficiency of the one or more electrolytic units. More preferably, said targeted minimum efficiency is greater than 70%.

There exists a direct relationship between temperature and efficiency in electrolytic units, and more particularly, in electrolyzers. In fact, adding heat energy to the electrical energy increases the rate of reaction within the electrolyzers. Thus, establishing a minimum target efficiency for the electrolytic units and determining the predetermined temperature range for efficiently operating the electrolytic units ensures a minimum efficiency for the overall substance generation process in the electrolysis plant.

In some embodiments, the method further comprises heating up the one or more electrolytic units up until an efficiency thereof reaches a predetermined efficiency threshold. In such case, an efficiency threshold is previously selected and then, the electrolytic units are heated up until said predetermined efficiency threshold is reached. In some embodiments, the predetermined efficiency threshold is equal to or greater than 75% of a nominal efficiency of the respective electrolytic unit and, in some cases, the predetermined efficiency threshold is equal to or greater than 85% of the nominal efficiency.

These efficiency thresholds may be selected so as to ensure that the overall electrolysis process is efficient, effective and economically profitable.

In some embodiments, the heating up is conducted in a constant or substantially manner such that the one or more electrolytic units are heated up with a constant or substantially constant intensity.

In some embodiments, the heating up is conducted in a progressive manner such that the one or more electrolytic units are heated up with lower intensity in a first time period than in a second time period, the second time period being posterior to the first time period.

Relatively steady heating up intensity or progressively greater intensity at a later stage (close to a future time span) reduces the time that the electrolytic units are at a high temperature. The electrolytic units degrade over time, especially when they are at high temperatures, therefore these heating up strategies reduce degradation of the electrolytic units.

In some embodiments, the heating up is conducted in a progressive manner such that the one or more electrolytic units are heated up with greater intensity in a first time period than in a second time period, the second time period being posterior to the first time period.

A more intense heating up at the beginning allows to put the electrolytic units at a temperature closer to the predetermined temperature range so that they can be ready in a subsequent shorter time span. This, in turn, for example allows to react faster to available power unexpectedly being available for delivery to the electrolytic units. The electrolytic units are thus able to maximize production or, in other words, be less time in a non-production state.

In some embodiments, the method further comprises calculating the difference between the available power in the electrolytic plant measured at a current instant and a forecasted (namely, an estimated) available power in the at least one electrolysis plant at a time instant later than the current instant, and determining the number of electrolytic units to be heated up when the forecasted available power is greater than the current available power and based on the calculated difference. Then, those electrolytic units previously determined are heated up.

In some embodiments, the time difference between the established future time span and the current time span depends on the current temperature of the deactivated electrolytic units of the electrolysis plant, the minimum temperature threshold of the predetermined temperature threshold and the electrolytic thermal inertia of the electrolytic units.

The deactivated electrolytic units are the units that take the longest time to reach the minimum temperature threshold since they are colder. These factors affect the time needed for the electrolytic units to reach the adequate or optimal operating temperature for the electrolysis process to produce, e.g., gas within the established efficiency and/or temperature thresholds.

In some embodiments, the determination of the heating up the electrolytic units is further based on an expected power of the plurality of electrolytic units in one or more time spans between the current time span and the at least one future time span.

In such cases, also the power that the electrolytic units are expected to have in one or more time intervals between the current time span and the future time span is considered. That is to say, how the electrolytic units are expected to be supplied with power (when and how much power) can also influence how the electrolytic units are to be heated up. In this way, the determination of the heating up of the electrolytic units can be carried out more accurately and following a smoother heating curve as a feedback loop or so to speak is provided whereby the heating up or control of the electrolytic units is taken into account for further heating up or control thereof. This may extend the operational life of the electrolyzers since they are subjected to less sudden heating and/or adjust more accurately how the electrolyzers are to be heated up so that they reach an adequate or optimal temperature at a given time instant in the future time span.

In some embodiments, the method further comprises determining the expected powering up at least based on third electric power available between the current time span and the at least one future time span.

The third electric power available is, e.g., a forecasted power provided to the electrolytic units at an intermediate time span between the current time span and the at least one future time span. This allows the heating curve applied to the electrolytic units to be smoother and, therefore, their heating to be more progressive and gradual avoiding causing damages to the electrolytic units.

In some embodiments, the expected powering up of the electrolytic units is further based on expected temperature of the one or more electrolytic units in the one or more time spans between the current time span and the at least one future time span.

In addition to the power supplied to the electrolytic units, the expected temperature that the electrolytic units may have in one or more time intervals between the current time span and the at least one future time span may be considered for subsequent control of the heating up. In other words, by estimating at what temperature the electrolytic units may be before the at least one future time span, the heating up of the electrolytic units may be sequentially adjusted so that the likelihood with which an adequate or optimum temperature is reached at the future time span is greater.

In some embodiments, the method further comprises determining the second electric power in the at least one future time span at least based on a weather forecast for the at least one future time span and a capacity for electric power production of at least one power plant by running an optimization problem.

The optimization problem maximizes the second electric power constrained such that the second electric power does not exceed a combination of:
capacity for powering the at least one electrolysis plant for generation of a substance, e.g., hydrogen, in the at least one future time span; and/or
capacity for powering the at least one electrolysis plant for heating up electrolytic units in the at least one future time span; and/or
capacity for delivering electric power to an electrical grid.

Further, the step of repeating comprises repeating the step of determining the first electric power the plurality of times. And the at least one power plant comprises at least one wind power plant.

In some embodiments, at least one of the at least one power plant and the at least one electrolysis plant is on-grid. In other words, the at least one power plant and/or the at least one electrolysis plant are/is tied to a local utility's grid.

In some embodiments, the optimization problem maximizes the second electric power constrained such that the second electric power does not exceed the capacity for powering the at least one electrolysis plant for generation of a substance and for heating up in the at least one future time span.

In this way, the forecasted power for the future time span is limited to the maximum power that the at least one electrolysis plant may be supplied with, thereby avoiding the potential production of power that the at least one electrolysis plant will not be able to use for substance production (but which could be used elsewhere, for example, a battery energy storage system, delivering to the grid, etc.). This, in turn, may reduce or avoid getting electric power from the grid because it will not be convertible into a substance, such as hydrogen.

In some embodiments, the at least one power plant and the at least one electrolysis unit are off-grid. In other words, the at least one power plant and the at least one electrolysis plant are isolated from any utility's grid.

In some embodiments, the optimization problem maximizes the second electric power constrained such that a difference in the first electric power of two consecutive future time spans in the at least one future span does not exceed a predetermined threshold, and/or a difference in electric power between the first electric power and the second electric power in a future time span consecutive to the current time span does not exceed the predetermined threshold.

To avoid damaging the electrolytic units, the first electric power to be used for heating up the electrolytic units may be constrained in such a way that there cannot be a variation in electric power between two time spans above a certain level, otherwise there could be considerable fluctuations in the power supplied to the electrolytic units. Namely, the power to be supplied to the electrolytic units may be made as constant as possible, thereby heating up the electrolytic units progressively and avoiding sudden changes in electric power.

In some embodiments, determining the second electric power in the at least one future time span is further based on available electric power at a battery energy storage system.

The electric power that the at least one electrolysis plant may be supplied with for heating up of the electrolytic units may at least partially be obtained from a battery energy storage system. A battery energy storage system may be part of a hybrid plant that combines a renewable power source such as a wind power plant or a solar power plant with a battery energy storage system.

Changes in electric power production by the renewable power sources can be alleviated with the use of electric power stored in a battery energy storage system. This means that the at least one electrolysis plant may be supplied with a substantially constant amount of electric power because the part of power not provided by the renewable power source in a time interval is compensated for by the battery energy storage system.

In some embodiments, the available electric power of the battery energy storage system comprises electric power available in the at least one future time span.

In some embodiments, determining the second electric power in the at least one future time span is further based on electric power available from the electrical grid when cost thereof is less than cost for a produced substance (or a substance to be produced).

When the cost for producing the substance, e.g., hydrogen, is less than the cost of taking electricity from the grid, which sometimes occurs when there is more electric power in the grid than the electric power demanded by users thereof, then the electric power available from the grid can be considered when estimating the electric power at the at least one future time span.

In some embodiments, the step of heating up of the electrolytic units comprises providing a control plan for heating up electrolytic units. Then, the method further determines the second electric power in the at least one future time span based on the previously provided control plan.

In some embodiments, the at least one power plant comprises further comprises at least one photovoltaic power plant (i.e., solar power plant), a tidal power plant, a hybrid power plant combining any of these technologies and/or at least one battery energy storage system.

In some embodiments, the at least one future time span starts between 5 minutes and 24 hours from the current time span, and, in some cases, between 5 minutes and 12 hours from the current time span. Alternatively, the at least one future time span may start at any other time interval from the current time span.

In some embodiments, the at least one future time span has a duration of one or more of the following values: 30 seconds, 1 minute, 5 minutes, and 10 minutes. In some other embodiments, the future time spans may have a different duration.

Using shorter time spans may allow obtaining a more accurate generation of temperature setpoints to heat up the electrolytic units than longer time spans. In some cases, a shorter time span may result in a higher computational cost.

In some embodiments, the at least one future time span comprises a plurality of future consecutive time spans, and each time the steps of determining the heating up of the electrolytic units, controlling and heating up of the electrolytic units are conducted, said steps are conducted for the plurality of future consecutive time spans thereby controlling the temperature of the one or more electrolytic units to be at a temperature within the predetermined temperature range in the plurality of future consecutive time spans.

A second aspect of the present disclosure relates to a computing device or system comprising means adapted to execute the steps of a method for heating up electrolytic units of an electrolysis plant as described in the first aspect of the present disclosure.

A third aspect of the present disclosure relates to a system comprising: at least one electrolysis plant; at least one power plant; and a computing device or system as described in the second aspect of the present disclosure. The computer device or system may be an integral part of an electrolysis plant controller or may be an external device or system communicatively coupled to the electrolysis plant controller.

A fourth aspect of the present disclosure relates to a computer program including instructions which, when the program is executed by at least one computing device or system, cause the at least one computing device or system to carry out the steps of a method for heating up electrolytic units of an electrolysis plant as described in the first aspect of the present disclosure. The at least one computing device or system may be an integral part of an electrolysis plant controller or may an external device or system communicatively coupled to the electrolysis plant controller.

The method for heating up electrolytic units of an electrolysis plant herein described presents several advantages and/or differences compared with previous methods. Specifically, this solution allows programming the operation of the modules/stacks of electrolytic units, e.g., electrolyzers, especially in what regards anticipation of use of electrolytic units so that they can be ready when needed. Carrying out this configuration of the electrolytic units in advance allows maximizing substance production since electrolytic units are capable of using most available power. Otherwise, workload of the electrolytic units cannot cope with sudden increase of available power. All this increases the efficiency of the overall process of converting electric power into chemical power in the electrolytic power plant.

The different aspects and examples defined in the foregoing may be combined with one another, as long as they are compatible with each other.

Additional advantages and features of the present disclosure will become apparent from the detail description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate an example of the disclosure, which should not be interpreted as restricting the scope of the disclosure, but just as an example of how the disclosure can be carried out. The drawings comprise the following figures:
Figure 1 shows a diagram of a method for heating up electrolytic units of an electrolysis plant, according to some examples of the present disclosure.
Figure 2 shows a diagram of another method for heating up electrolytic units of an electrolysis plant, according to some examples of the present disclosure.
Figure 3 shows a block diagram of a system for heating up electrolytic units of an electrolysis plant, according to some examples of the present disclosure.

### DESCRIPTION OF EXAMPLES

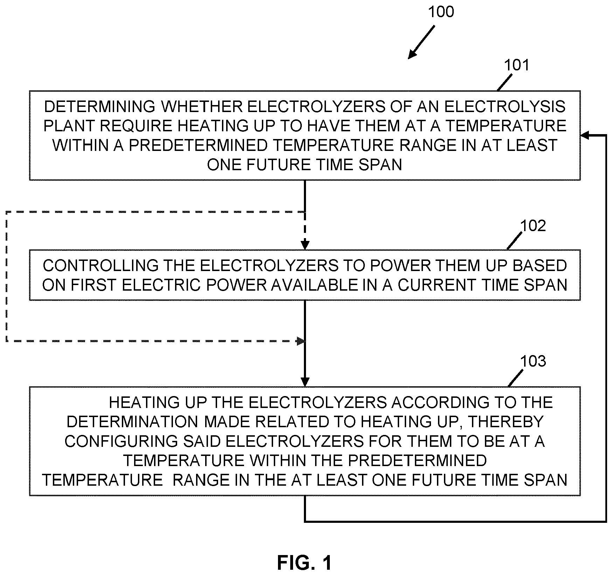

Figure 1 is a flow diagram of a method 100 for heating up electrolytic units, e.g., electrolyzers, of an electrolysis plant, according to some examples of the present disclosure.

At step 101 of the method 100, it is determined whether one or more electrolyzers of a plurality of electrolyzers of one or more electrolysis plants requires being heated up at a temperature that is within a predetermined temperature range in at least one future time span. To make the determination, at least an electric power that is forecasted to be available in the at least one future time span and the temperature of the one or more electrolyzers in a current time span are considered. Moreover, the determination step 101 may not only include determining whether electrolyzer/s in fact require heating up, but also determining which electrolyzer/s is/are to be heated up.

The predetermined temperature range is, in preferred examples, the temperature range within which the electrolyzers are more or most efficient producing a substance such as hydrogen. The range may significantly differ depending on the type of electrolyzers being used. For example, for low temperature PEM electrolyzers (LT-PEME), the optimal temperature range may vary between 70-90°C while for high temperature electrolyzers, such as alkaline electrolyzers and/or solid oxide electrolyzers, the optimal temperature range may vary between 700-800°C. Any of these and/or other electrolyzers are suitable electrolytic units for the present disclosure and they all fall within the scope of this disclosure.

At step 101, it could be determined that all the electrolyzers or only a subset of electrolyzers of the electrolysis plant(s) need to be heated up. The future time span selected for carrying out the heating up may range from a few minutes, e.g., 5 minutes, to longer periods of time, e.g., 2/4/6/12 hours or more, from the current time span. Besides the future time span may last from a few minutes such as 2 minutes, 3 minutes or 5 minutes, to longer spans such as 20 minutes, 30 minutes, etc. The shorter the future time span, the more accurate the temperature setpoint obtained may be.

By way of example, it may be determined that the available power in the future time span, taking place in, e.g., 5 minutes, will be 5 MW greater than the current available electric power, and a number N of electrolyzers will be necessary to use all the available electric power at that time. Data indicative of the current temperature of the N electrolyzers (e.g., three fourths of the N electrolyzers are at a temperature of 70°C and one fourth of the N electrolyzers are at a temperature of 45°C) is thus considered to establish whether heating up is necessary and how much heating up is needed to reach the predetermined temperature range (e.g., between 70°C and 80°C). In such exemplary scenario, at least the one fourth of the N electrolyzers would require heating up to 70°C and 80°C by the time that the future time span is to be reached.

At step 102 of the method 100, which is conducted in some examples as illustratively represented by way of a dashed arrowed line, one or more electrolyzers of the one or more electrolysis plants are controlled to be powered up based on the electric power available at the current time span for the generation of the substance; for example, part or the totality of the available electric power is supplied to the electrolyzers for conducting electrolysis.

At step 103 of the method 100, which can be conducted before, after or simultaneously with step 102 when step 102 is part of the method 100, one or more electrolyzers of the one or more electrolysis plants previously determined are heated up according to the determination made in step 101; by way of example, the one or more electrolyzers may be controlled to be heated up, or other apparatuses may be controlled to direct heat to the electrolyzers for heating them up. To do so, a temperature setpoint may be provided for the electrolyzers. Said temperature setpoint may determine the operating temperature for a particular electrolyzer of the plurality of electrolyzers determined to be heated up, for a particular subset of the plurality of electrolyzers determined to be heated up or for all the electrolyzers determined to be heated up. The electrolyzers can be heated up following different heating curves provided that following said heating curves the electrolyzers are able to operate at the required temperature within the predetermined temperature range in the at least one future time span. To this end, the difference between the future time span and the current time is to be considered to heat up the electrolyzers more or less during the time interval ranging from the current time span and the future time span.

The step of determining 101 the heating up of the electrolytic units and the steps of controlling 102 and heating up 103 of the electrolyzers are executed repeatedly a plurality of times such that the heating up of the electrolyzers is determined for one or more future time spans that occur at the same time and/or later than the at least one future time span. In this way, the temperature of the one or more electrolyzers is repeatedly controlled to be at a temperature within the predetermined temperature range in the one or more future time spans. Besides, the determination of the heating up of the electrolyzers is at least based on an estimated electric power available in the at least one future time span and the temperature of a plurality of electrolyzers in the current time span. Therefore, how much and how the electrolyzers are to be heated up will depend on the current temperature of the electrolyzers units and a forecast/estimation of the power available at that future time span. By repeating the steps of determining the heating up of the electrolyzers, controlling and heating up of the electrolyzers, a plurality of temperature setpoints, each temperature setpoint corresponding to a different future time span and based on the estimated power availability at those future time spans, are generated for the determined electrolyzers to maximize hydrogen production.

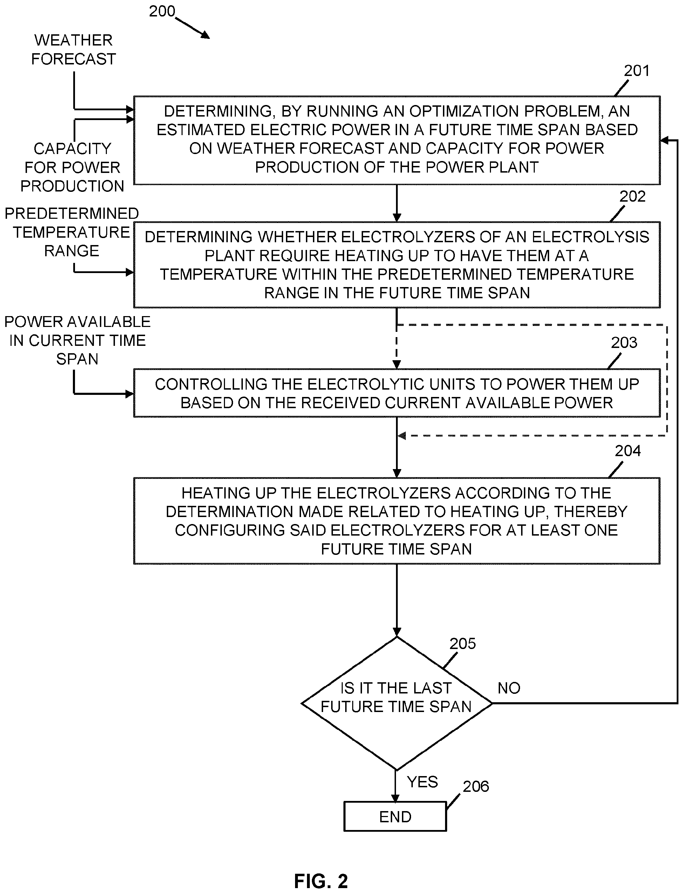

Figure 2 shows a diagram of another method 200 for heating up electrolytic units, preferably, electrolyzers, of an electrolysis plant, according to some examples of the present disclosure.

At step 201 of the method 200, an optimization problem is run to determine an estimated electric power available in a particular future time span that may start in, e.g., 5 minutes, 30 minutes, 1 hour, etc., from the current time span. The optimization problem may be run by a computing device or system conducting part or the entirety of the method 200 and which may be part of, e.g., a power plant having or being connected with the electrolysis plant, or be external to the power plant (for example, in a computing cloud).

To obtain said estimated electric power available, the optimization problem uses as inputs, for example, a weather forecast and/or an estimated capacity for power production at that particular future time span, produced power to be used by the electrolysis plant. The weather forecast may be particularly important when the power feeding the electrolysis plant comes from one or more renewable power sources that may be influenced by the meteorological conditions (e.g., wind gusts, changes in wind direction, direct sun, clouds, etc.), and/or when power comes from a non-renewable power source since, for instance, extreme temperatures and heavy rains or snowfalls may affect electricity production of power plants not directly linked to meteorological phenomena.

The estimated capacity for power production will depend on at least the number of available generation units of the power plant, the capacity of power generation of each of said generation units, their operating mode (curtailed mode, ramped mode, etc.) and other generation restrictions that may be imposed by the grid code, among other parameters or conditions. The optimization problem may be constrained so as to ensure that load from the electrolysis plant does not overload power generation capacity from the power source/s, even if one or more of the generation units should shut down unexpectedly.

At step 202 of the method 200, it is determined which electrolyzer/s of the plurality of electrolyzers of the electrolysis plant require/s being heated up at a temperature that is within a predetermined temperature range in at least one future time span as for example described with reference to step 101 of the method 100 in Figure 1. The predetermined temperature range may be provided, for example, by the electrolysis plant operator and be dependent upon the particularities of the electrolyzers and their working condition.

At step 203 of the method 200, the electrolyzers of the electrolysis plant previously determined are controlled to be powered up based on the electric power available at the current time span as for example described with reference to step 102 of the method 100 in Figure 1. The power available at the current time span may be provided, for example, by the corresponding power generation plant controller.

At step 204 of the method 200, the electrolyzers of the electrolysis plant previously determined are heated up according to the determination made related to heating up as for example described with reference to step 103 of the method 100 in Figure 1.

At step 205 of the method 200 it is determined whether the received future time span at step 201 of the method 200 is the last future time span to be considered, the next future time spans occurring at the same time and/or later than the first future time span considered. For example, when the power plant generates power through photovoltaic panels, no future time spans may be considered when the power production is too low due to meteorological conditions, and the method 200 be restarted once power production is expected to increase for a future time span. If no more future time spans are to be considered, the method 200 ends 206 until a new first future time span of another set of future time spans is received. If there are more future time spans to be considered, then, the method 200 executes steps 201-205 until no more future time spans are to be considered, thereby creating a loop.

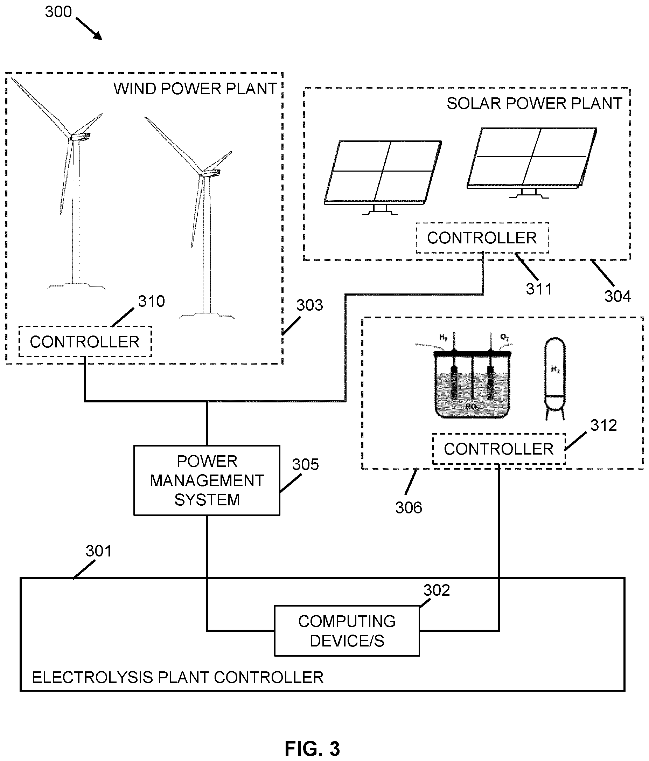

Figure 3 is a block diagram of a system 300 for heating up electrolytic units of an electrolysis plant, according to some examples of the present disclosure. It should be understood that the system 300 depicted in Figure 3 may include additional components and that some of the components described herein may be removed and/or modified without departing from the scope of the system 300. Additionally, implementation of the system 300 is not limited to such examples.

The system 300 comprises an electrolysis plant controller 301 having one or more computing devices 302 (e.g., classical processor/s, quantum processor/s) configured to receive (through, e.g., a data communications module for wired or wireless communications) at least values of current power generation and power generation forecasts (i.e., estimations) relative to power plants at any given moment. As depicted in Figure 3, the one or more computing devices 302 (through, e.g., a data communications module thereof) of the electrolysis plant controller 300 are communicatively coupled to a power management system 305 controlling a wind power plant 303 and a solar power plant 304, particularly to controllers 310, 311 thereof. While the wind power plant 303 and the solar power plant 304 are depicted in Figure 3 comprising two wind turbines and two solar panels, respectively, said wind power plant 303 and solar power plant 304 may comprise any number of wind turbines and solar panels.

The one or more computing devices 302 are configured to execute instructions that may, for example, be stored in at least one memory, that is to say, a machine-readable storage medium. The instructions may for example be instructions corresponding to method 100 and/or method 200 described with reference to Figures 1 and 2.

The electrolysis plant controller 301 may include hardware and software logic to perform the functionalities described above in relation to the instructions, e.g., method 100 and/or method 200. The at least one memory or machine-readable storage medium may be located either in the computing device/s executing the machine-readable instructions, or remote from but accessible to the computing device/s (e.g., via a computer network) for execution.

The one or more computing devices 302 are also communicatively coupled to a controller 312 of an electrolysis plant 306. The one or more computing devices 302 are configured to at least receive values of the current temperature of each one of electrolyzers of the electrolysis plant 306 and to transmit, to the controller 312, data such as control commands and/or temperature setpoints that may be determined from the instructions executed.

As used herein, the term "processor" may refer to at least one of a central processing unit (CPU), a semiconductor-based microprocessor, a graphics processing unit (GPU), a field-programmable gate array (FPGA) configured to retrieve and execute instructions, other electronic circuitry suitable for the retrieval and execution instructions stored on a machine-readable storage medium, a quantum processing unit, or a combination thereof. A processor may fetch, decode, and execute instructions stored on machine-readable storage medium to perform the functionalities described above in relation to the instructions to be executed. In other examples, the functionalities of the instructions may be implemented in the form of electronic circuitry, in the form of executable instructions encoded on a memory or machine-readable storage medium, or a combination thereof.

As used herein, the terms "memory" and "machine-readable storage medium" may refer to any electronic, magnetic, optical, or other physical storage apparatus to contain or store information such as executable instructions, data, and the like. For example, any memory or machine-readable storage medium described herein may be any of Random Access Memory (RAM), volatile memory, non-volatile memory, flash memory, a storage drive (e.g., a hard drive), a solid state drive, any type of storage disc (e.g., a compact disc, a DVD, etc.), and the like, or a combination thereof. Further, any memory or machine-readable storage medium described herein may be non-transitory. In examples described herein, a memory or machine-readable storage medium or media may be part of an article (or article of manufacture). An article or article of manufacture may refer to any manufactured single component or multiple components.

While Figure 3 has been depicted comprising a hybrid power plant formed by a wind power plant 303 and a solar power plant 304, in some other examples power could come from any other power source, both renewable and non-renewable power sources. For example, these power sources may be selected from a group comprising wind power plants, solar power plants, battery energy storage systems (BESS), hydroelectric power plants, coal-fired power plants, gas-fired power plants, tidal power plants, oil-fired power plants, nuclear power plants, or a hybrid power plant comprising any combination of the aforementioned technologies.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims. In this sense, all of the features disclosed in this specification (including any accompanying claims, abstract and drawings), and/or all of the elements of any system, method or process so disclosed, may be combined in any combination, except combinations where at least some of such features and/or elements are mutually exclusive.

## Claims

1. A computer-implemented method (100) comprising:
determining (101) whether one or more electrolytic units of at least one electrolysis plant require heating up to have the one or more electrolytic units at a temperature within a predetermined temperature range in at least one future time span;
controlling the one or more electrolytic units to power up (102) said electrolytic units based on first electric power available in a current time span;
heating up (103) said electrolytic units according to the determination made related to heating up, thereby configuring said electrolytic units to be at a temperature within the predetermined temperature range in the at least one future time span; and
repeating (104), a plurality of times, the steps of determining the heating up of the electrolytic units, controlling and heating up of the electrolytic units such that the heating up is determined for one or more future time spans that occur at the same time and/or later than the at least one future time span, thereby repeatedly controlling the temperature of the one or more electrolytic units to be at a temperature within the predetermined temperature range in the one or more future time spans;
wherein the determination of the heating up of the electrolytic units is at least based on second electric power available in the at least one future time span and temperature of a plurality of electrolytic units of the at least one electrolysis plant in the current time span; and
wherein the plurality of electrolytic units comprises the one or more electrolytic units.

2. The method of claim 1, wherein the predetermined temperature range is selected based on a targeted minimum efficiency of the one or more electrolytic units, wherein, preferably, said targeted minimum efficiency is greater than 70%.

3. The method of any one of the preceding claims, further comprising heating up the one or more electrolytic units up until an efficiency thereof reaches a predetermined efficiency threshold, wherein, preferably, the predetermined efficiency threshold is equal to or greater than 75% of a nominal efficiency of the respective electrolytic unit, and wherein, more preferably, the predetermined efficiency threshold is equal to or greater than 85% of the nominal efficiency.

4. The method of any one of the preceding claims, further comprising:
calculating a difference between an available power of the at least one electrolysis plant measured at a current time instant and an estimated available power of the at least one electrolysis plant at a time instant later than the current time instant;
determining a number of the one or more electrolytic units to be heated up when the estimated available power is greater than the current available power and based on the calculated difference; and
heating up the determined electrolytic units.

5. The method of any one of the preceding claims, wherein a time difference between the future time span and the current time span depends on a current temperature of deactivated electrolytic units, a minimum temperature threshold of the predetermined temperature range and an electrolytic thermal inertia of the electrolytic units.

6. The method of any one of the preceding claims, wherein the determination of the heating up the electrolytic units is further based on an expected power of the plurality of electrolytic units in one or more time spans between the current time span and the at least one future time span.

7. The method of claim 6, further comprising determining the expected powering up at least based on third electric power available between the current time span and the at least one future time span and/or an expected temperature of the one or more electrolytic units in the one or more time spans between the current time span and the at least one future time span.

8. The method of any one of the preceding claims, further comprising determining the second electric power in the at least one future time span at least based on a weather forecast for the at least one future time span and capacity for electric power production of at least one power plant by running an optimization problem; wherein the optimization problem maximizes the second electric power constrained such that the second electric power does not exceed a combination of:
capacity for powering the at least one electrolysis plant for generation of hydrogen in the at least one future time span; and/or
capacity for powering the at least one electrolysis plant for heating up electrolytic units in the at least one future time span; and/or
capacity for delivering electric power to an electrical grid;
wherein the step of repeating comprises repeating the step of determining the second electric power the plurality of times; and
wherein the at least one power plant comprises at least one wind power plant.

9. The method of claim 8, wherein the optimization problem maximizes the second electric power constrained such that the second electric power does not exceed the capacity for powering the at least one electrolysis plant for generation of hydrogen and for heating up in the at least one future time span.

10. The method of any one of claims 8-9, wherein the optimization problem maximizes the second electric power constrained such that a difference in the second electric power of two consecutive future time spans in the at least one future span does not exceed a predetermined threshold, and/or a difference in electric power between the first electric power and the second electric power in a future time span consecutive to the current time span does not exceed the predetermined threshold.

11. The method of any one of claims 8-10, wherein determining the second electric power in the at least one future time span is further based on available electric power at a battery energy storage system.

12. The method of any one of claims 8-11, wherein determining the second electric power in the at least one future time span is further based on electric power available from the electrical grid when cost thereof is less than cost for produced hydrogen.

13. The method of any one of claims 8-12, wherein the step of heating up of the electrolytic units comprises providing a control plan for heating up electrolytic units; wherein determining the second electric power in the at least one future time span is further based on a previously provided control plan.

14. The method of any one of the preceding claims, wherein the at least one future time span comprises a plurality of future consecutive time spans, and wherein each time the steps of determining the heating up of the electrolytic units, controlling and heating up of the electrolytic units are conducted, said steps are conducted for the plurality of future consecutive time spans thereby controlling the temperature of the one or more electrolytic units to be at a temperature within the predetermined temperature range in the plurality of future consecutive time spans.

15. A computing device or system comprising means adapted to execute the steps of a method according to any one of the preceding claims.
